# EUROPÄISCHE PATENTANMELDUNG

(11) **EP 2 042 889 A2**
(43) Veröffentlichungstag der Anmeldung: **01.04.2009**
(21) Anmeldenummer: 08105142.7
(22) Anmeldetag: 27.08.2008
(51) Int. Cl.: G01S 13/93, G01S 7/41, G01S 7/28

(54) **Radarsensor zur Erfassung des Verkehrsumfelds in Kraftfahrzeugen**

(30) Priorität: 28.09.2007 DE 102007046648
(71) Anmelder: ROBERT BOSCH GMBH, 70442 Stuttgart (DE)
(72) Erfinder: Hilsebecher, Joerg, 31135 Hildesheim (DE); Zender, Arne, 31162 Bad Salzdetfurth (DE)

(57) **Zusammenfassung**

Radarsensor zur Erfassung des Verkehrsumfelds in Kraftfahrzeugen (18), mit einem einstellbaren Sende- und/oder Empfangsverstärker (22, 30) und einer Einstelleinrichtung (34) zur Einstellung des Sende- und/oder Empfangsgewinns, gekennzeichnet durch eine Bewertungseinrichtung (32), die dazu ausgebildet ist, fortlaufend das Verkehrsumfeld zu bewerten und in Abhängigkeit von der aktuellen Bewertung auf die Einstelleinrichtung (34) einzuwirken.

## Beschreibung

### Stand der Technik

Die Erfindung betrifft einen Radarsensor zur Erfassung des Verkehrsumfelds in Kraftfahrzeugen, mit einem einstellbaren Sende- und/oder Empfangsverstärker und einer Einstelleinrichtung zur Einstellung des Sende- und/oder Empfangsgewinns.

Aus US 2006/044180 A1 ist ein Radarsensor dieser Art bekannt, bei dem der Pegel des empfangenen und der Auswerteeinheit zur Verfügung gestellten Signals an die Einstelleinrichtung (Gain Control) zurückgemeldet wird, so daß die Stärke des empfangenen Signals in einem geschlossenen Regelkreis geregelt werden kann.

In Kraftfahrzeugen werden Radarsensoren in Verbindung mit Fahrerassistenzsystemen eingesetzt, beispielsweise in adaptiven Geschwindigkeitsregelsystemen (Adaptive Cruise Control; ACC), um den Abstand und die Relativgeschwindigkeit des unmittelbar vorausfahrenden Fahrzeugs zu messen, so daß durch Eingriff in das Antriebs- und/oder Bremssystem des eigenen Fahrzeugs der Abstand zum Vorderfahrzeug automatisch geregelt werden kann. Ein anderes Anwendungsbeispiel sind sogenannte prädiktive Sicherheitssysteme, die dazu dienen, mit Hilfe des Radarsensors eine unmittelbar bevorstehende Kollision zu erkennen und dann automatisch geeignete Maßnahmen einzuleiten, um entweder die Kollision noch abzuwenden oder Sicherheitssysteme wie Airbags oder dergleichen zu aktivieren und so zumindest die Folgen der Kollision zu mildern.

ACC-Systeme der ersten Generation waren nur für den Einsatz auf Autobahnen oder gut ausgebauten Landstraßen vorgesehen und brauchten deshalb nur auf bewegliche Objekte zu reagieren. Wenn solche Systeme jedoch auch im Stop-&-Go-Betrieb oder im Stadtverkehr eingesetzt werden sollen, muß auch der ruhende Verkehr beobachtet werden, so daß die Anzahl der zu erfassenden und hinsichtlich ihrer Relevanz zu bewertenden Objekte beträchtlich zunimmt. Um den damit verbundenen Verarbeitungsaufwand in Grenzen zu halten, wird bei dem Radarsensor, typischerweise einem winkelauflösenden Mehrstrahlradar, der Gewinn für die äußeren Strahlen um etwa 20 dB reduziert, so daß der Radarsenor im wesentlichen nur für Objekte empfindlich ist, die sich auf der Fahrbahn oder unmittelbar am Fahrbahnrand befinden. Dennoch kann in bestimmten Verkehrssituationen die Empfindlichkeit des Radarsensors zu groß oder zu klein sein.

Mit zunehmender Verbreitung von Radarsystemen in Kraftfahrzeugen steigt auch die Gefahr, daß sich die Radarsensoren verschiedener Fahrzeuge gegenseitig stören.

### Offenbarung der Erfindung

Aufgabe der Erfindung ist es deshalb, einen Radarsensor für Kraftfahrzeuge zu schaffen, bei dem das Sende- und/oder Empfangsverhalten besser an die aktuelle Verkehrssituation angepaßt ist.

Diese Aufgabe wird erfindungsgemäß gelöst durch eine Bewertungseinrichtung, die dazu ausgebildet ist, fortlaufend das Verkehrsumfeld zu bewerten und in Abhängigkeit von der aktuellen Bewertung auf die Einstelleinrichtung einzuwirken.

Somit wird erfindungsgemäß die Sendeleistung und/oder die Empfangsverstärkung des Radarsensors mit Hilfe der Einstelleinrichtung dynamisch an die von der Bewertungseinrichtung erfaßte Verkehrssituation angepaßt.

Beispielsweise kann somit bei Fahrten auf Autobahnen die Sendeverstärkung erhöht werden, damit der Radarsensor eine möglichst große Reichweite hat, während im Stadtverkehr die Sendeleistung reduziert wird, damit die Radarsysteme anderer Fahrzeuge weniger gestört werden und auch für das eigene System die Anzahl störender Radarechos von irrelevanten Objekten reduziert wird.

Ebenso ist es möglich, den Gewinn des Radarsensors bei Kurvenfahrten zu modifizieren, damit der Ortungsbereich besser an den Fahrbahnverlauf angepaßt wird. Weiterhin kann der Gewinn in Abhängigkeit von der Fahrspur modifiziert werden, die das eigene Fahrzeug befährt. Beispielsweise kann bei einer Fahrt auf der mittleren Spur einer mindestens dreispurigen Autobahn der Gewinn erhöht werden, damit auch Fahrzeuge auf den Nebenspuren sicher erfaßt werden können, während bei einer Fahrt auf der äußersten rechten Spur der Gewinn reduziert werden kann, um Störsignale von Objekten am Fahrbahnrand zu unterdrücken. Bei einem Mehrstrahlradar kann der Gewinn auch für jeden Strahl einzeln situationsabhängig variiert werden, so daß eine noch gezieltere Anpassung an das Verkehrsumfeld erreicht wird.

Vorteilhafte Ausgestaltungen der Erfindung sind in den Unteransprüchen angegeben.

Die Bewertung des Verkehrsumfelds kann anhand der Daten erfolgen, die vom Radarsensor selbst geliefert werden. In diesem Fall erfolgt auch bei dem erfindungsgemäßen Radarsensor die Einstellung des Gewinns in einem geschlossenen Regelkreis, doch beschränkt sich dieser Regelkreis anders beim Stand der Technik nicht auf die Regelung des Empfangspegels auf der untersten Stufe der Verarbeitungshierarchie, sondern er schließt höhere Verarbeitungsstufen ein, in denen eine Bewertung des Verkehrsumfelds stattfindet.

Wahlweise oder zusätzlich können zur Erfassung und Bewertung des Verkehrsumfelds auch andere Datenquellen herangezogen werden, beispielsweise Daten aus einem Navigationssystem, Daten eines Videoverarbeitungssystems oder Daten eines Kommunikationssystems, das eine drahtlose Kommunikation mit anderen Fahrzeugen oder mit stationären Infrastruktureinrichtungen ermöglicht. Im letzteren Fall kann beispielsweise in einer akuten Gefahrensituation durch die Kommunikation von Fahrzeug zu Fahrzeug dem gefährdeten Fahrzeug eine größere Sendeleistung zur Verfügung gestellt werden, während bei anderen Fahrzeugen die Sendeleistung reduziert wird, um Störsignale zu vermeiden.

Die Bewertung des Verkehrsumfelds kann auch auf der Grundlage von gespeicherten Daten erfolgen, die die historische Entwicklung des Verkehrsgeschehens oder weiter zurückliegende Erfahrungen widerspiegeln. Die Bewertung kann mit Hilfe entsprechender Speicher, Filter sowie mit heuristischen Algorithmen, Prädiktionsalgorithmen oder sonstigen geeigneten Algorithmen erfolgen.

Besonders vorteilhaft ist die Erfindung auch bei sogenannten scannenden Radarsensoren, d.h., bei Radarsensoren, deren Sende- und Empfangskeulen nicht statisch sind, sondern dynamisch im Azimut verschwenkt werden, so daß das Verkehrsumfeld beispielsweise periodisch abgetastet wird. Eine Verbesserung der Auswertungsergebnisse, insbesondere eine verbesserte Winkelauflösung, läßt sich dann dadurch erreichen, daß der Gewinn in Abhängigkeit von der zuvor festgestellten Winkelverteilung der georteten Objekte und in Abhängigkeit vom aktuellen Azimutwinkel der Radarkeule variiert wird.

### Kurze Beschreibung der Zeichnungen

Ein Ausführungsbeispiel der Erfindung ist in den Zeichnungen
dargestellt und in der nachfolgenden Beschreibung näher erläutert.

Es zeigen:
- Fig.1: ein Blockdiagramm eines erfindungsgemäßen Radarsensors;
- Fig.2: eine Skizze einer Verkehrssituation zur Illustration der Arbeitsweise des Radarsensors nach Fig.1;
- Fig. 3: ein Blockdiagramm eines Radarsensors gemäß einem modifizierten Ausführungsbeispiel;
- Fig. 4: ein Amplituden-Winkel-Diagramm für den Radarsensor nach Fig. 3;
- Fig. 5: ein Gewinn-Winkel-Diagramm für den Radarsensor nach Fig. 3; und
- Fig. 6: ein Amplituden-Winkel-Diagramm des Radarsensors nach Fig. 3, dessen Gewinn gemäß Fig. 4 variiert wird.

### Ausführungsformen der Erfindung

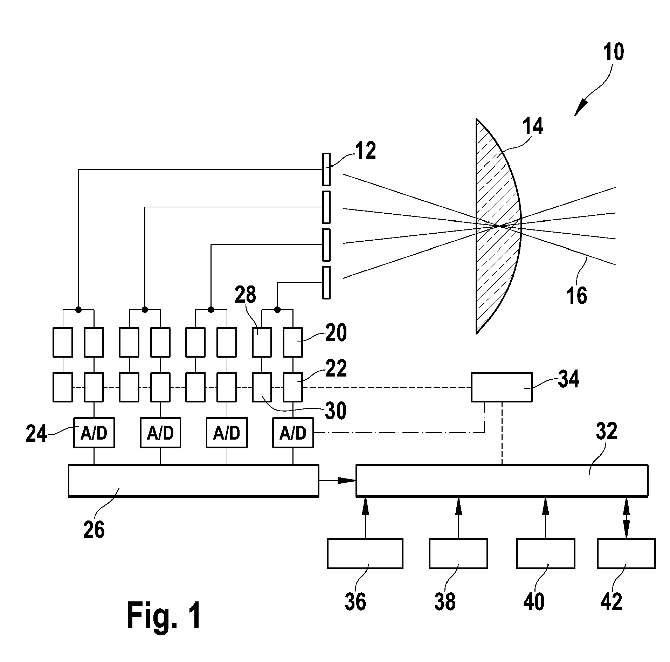

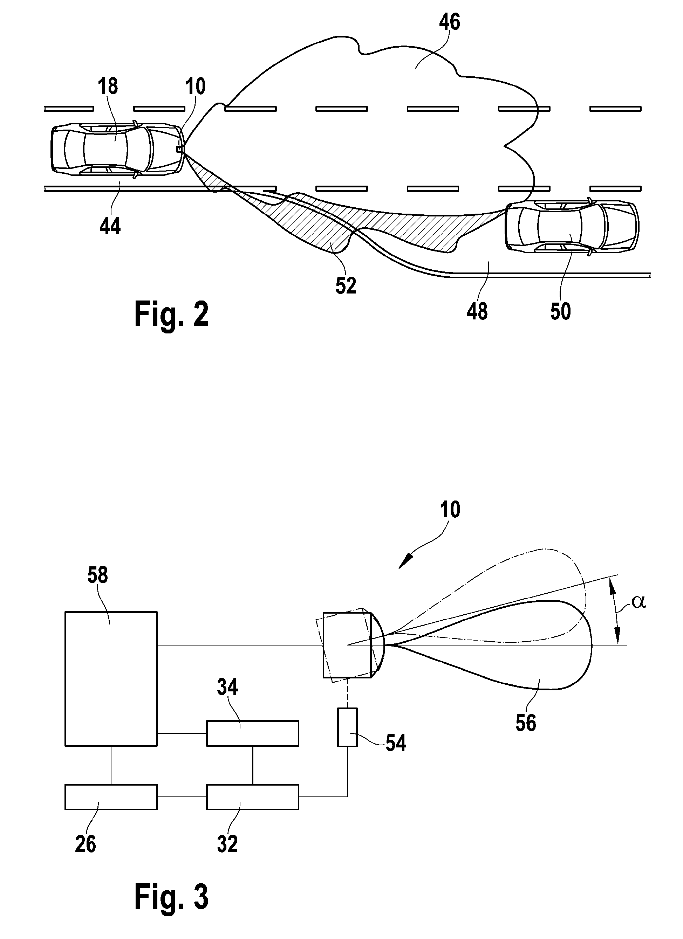

In dem in Fig.1 gezeigten Beispiel weist ein Radarsensor 10 vier Antennen 12 auf, von denen jede sowohl zum Senden eines Radarsignals wie auch zum Empfang des reflektierten Radarechos dient und die annähernd in der Brennebene einer gemeinsamen Radarlinse 14 angeordnet sind, so daß sie vier im Azimut gegeneinander winkelversetzte Radarstrahlen 16 erzeugen. Wenn der Radarsensor 10 an der Vorderfront eines Kraftfahrzeugs 18 (Fig.2) eingebaut und nach vorn gerichtet ist, wird so eine gute Ausleuchtung der Fahrbahn vor dem Fahrzeug 18 erreicht, und durch Vergleich der Amplituden und/oder Phasen der von verschiedenen Antennen 12 empfangenen Signale läßt sich auch der Azimutwinkel eines georteten Objekts ermitteln.

Jede Antenne 12 ist mit einer analogen Empfangseinheit 20 verbunden, die ihrerseits über einen Empfangsverstärker 22 mit einem Analog/Digital-Wandler 24 verbunden ist, der ein digitales Ausgangssignal an eine Auswerteschaltung 26 liefert. Weiterhin ist jede Antenne 12 mit einer Sendeschaltung 28 verbunden, die mit einem Sendeverstärker 30 kombiniert ist.

Die Sendeschaltungen 28 aller vier Kanäle können ein Signal von einem gemeinsamen Oszillator erhalten, das dann in jedem Kanal individuell mit Hilfe des Sendeverstärkers 30 verstärkt werden kann. In einer anderen Ausführungsform kann auch jede Sendeschaltung 28 über einen eigenen Oszillator verfügen. In dem Fall kann als "Verstärker" auch eine Einrichtung vorgesehen sein, die den Oszillator ansteuert und die Leistung des von dem Oszillator erzeugten Signals bestimmt. Mit den Begriffen "Empfangsverstärker" und "Sendeverstärker" sollen deshalb hier allgemein Einrichtungen bezeichnet werden, mit denen es möglich ist, den Sendegewinn bzw. den Empfangsgewinn dynamisch zu variieren. Es ist auch eine Konfiguration denkbar, bei der den Sendeschaltungen 28 aller Kanäle nur ein einziger Verstärker zugeordnet ist, mit dem der Sendegewinnn in allen Kanälen synchron variiert wird.

In der Auswerteschaltung 26 werden die von den Analog/Digital-Wandlern 24 gelieferten digitalen Ortungsdaten weiter ausgewertet, und letztlich werden aus diesen Daten die Abstände, Relativgeschwindigkeiten und Azimutwinkel der georteten Objekte errechnet, es wird zwischen relevanten Objekten auf der Fahrbahn und irrelevanten Objekten abseits der Fahrbahn unterschieden, und die Objekte werden in einer als "Tracking" bezeichneten Prozedur über aufeinanderfolgenden Meßzyklen hinweg verfolgt, so daß man letztlich ein Bild einer Verkehrssituation gewinnt, das dann die Grundlage für eine Abstandsregelung, für ein prädiktives Sicherheitssystem oder dergleichen bildet.

In dem hier gezeigten Beispiel werden die Daten, die die von der Auswerteschaltung 26 erfaßten Verkehrssituation kennzeichnen, auch einer Bewertungseinrichtung 32 zur Verfügung gestellt, die eine Bewertung des Vekehrsumfelds mit dem Ziel vornimmt, die Sende- und Empfangsleistung des Radarsensors 10 zu optimieren. Die Bewertungseinrichtung 32 übermittelt deshalb das Bewetungsergenis an eine Einstelleinrichtung 34, die die Empfangsverstärker 22 und Sendeverstärker 30 aller Kanäle individuell ansteuert. Somit läßt sich der Sende- und Empfangsgewinn in jedem Kanal einzeln einstellen, und auch der Sendegewinn und der Empfangsgewinn innerhalb eines Kanals können vorzugsweise unabhängig voneinander eingestellt werden.

Beispielsweise kann eine Grundeinstellung darin bestehen, daß die Sendeleistung und damit die insgesamt in die Umgebung abgestrahlte Energie auf ein funktionsnotwendiges Minimum begrenzt wird und der Empfangsgewinn mit Hilfe der Empfangsverstärker 22 so geregelt wird, daß der Dynamikbereich der Analog-Digital-Wandler 24 optimal ausgenutzt wird. Zu diesem Zweck erhält die Einstelleinrichtung 34 über eine in Fig. 1 strichpunktiert dargestellte Leitung auch Information über die Pegel der verstärkten Analogsignale, die den Analog/Digital-Wandlern 24 zugeführt werden.

Darüberhinaus kann die Bewertungseinrichtung 32 jedoch auch dafür sorgen, daß der Sendegewinn und/oder der Empfangsgewinn in allen Kanälen oder in einzelnen Kanälen gezielt an das jeweilige Verkkehrsumfeld angepaßt wird. Beispielsweise kann in einer Freifahrtsituation, wenn kein vorausfahrendes Fahrzeug verfolgt wird, insbesondere bei höherer Geschwindigkeit, der Sendegewinn erhöht werden, damit eventuell auftauchende vorausfahrende Fahrzeuge schon in einem größeren Abstand erkannt werden können. Umgekehrt kann in einer Folgefahrtsituation bei niedriger Geschwindigkeit und entsprechend geringen Fahrzeugabständen der Sendegewinn reduziert werden. In Kurven kann der Sende- und/oder der Empfangsgewinn reduziert werden, um die Reichweite des Radarsensors so zu begrenzen, daß möglichst nur Objekte auf der Fahrbahn geortet werden aber keine Objekte, die hinter der Kurve relativ weit abseits der Fahrbahn liegen.

Ebenso können bei Fahrten mit hoher Geschwindigkeit der Sendegewinn und der Empfangsgewinn für die äußeren Radarstrahlen 16 reduziert werden, damit der Ortungsbereich des Radarsensors im wesentlichen auf den Fahrbahnbereich beschränkt wird. Bei Fahrten mit niedriger Geschwindigkeit kann dagegen der Gewinn für die äußeren Radarstrahlen erhöht werden, so daß das Verkehrsgeschehen im Nahbereich besser erfaßt werden kann und insbesondere Einscherer frühzeitig erkannt werden können. In Kurven oder in sonstigen asymmetrischen Verkehrssituationen, etwa bei Fahrten auf der äußersten rechten oder äußersten linken Spur einer mehrspurigen Fahrbahn, ist es auch möglich, den Gewinn für die verschiedenen Radarstrahlen 16 asymmetrisch zu variieren und so eine optimale Anpassung an die jeweilige Situation zu erreichen.

Der Bewertungseinrichtung 32 ist ein Speicher 36 zugeordnet, in dem die entsprechenden Bewertungsalgorithmen für die Bestimmung der Sende- und Empfangsgewinne gespeichert sind. In dem Speicher 36 kann auch die Historie des Verkehrsgeschehens gespeichert sein, so daß die Bestimmung des jeweiligen Sende- und Empfangsgewinns nicht nur von der aktuellen Situation, sondern auch von weiter zurückliegenden Ereignissen abhängig sein kann. Denkbar ist schließlich auch eine Optimierung der Gewinne auf der Grundlage früherer Erfahrungen im Sinne eines selbstlernenden Systems.

Die Erfassung des Verkehrsumfelds braucht nicht allein auf den Daten der Auswerteschaltung 26 beruhen, sondern kann sich ergänzend auch auf andere Datenquellen stützen, beispielsweise ein Navigationssystem 38, dessen digitale Straßenkarte Information über Fahrbahnverläufe und gegebenenfalls weitere Fahrbahnparameter (Anzahl der Spuren etc.) liefert. Sofern ein Videosystem 40 mit zugehöriger Bildverarbeitungseinrichtung vorhanden ist, können auch dessen Daten zur Bewertung des Verkehrsumfelds herangezogen werden, beispielsweise um zu bestimmen, auf welcher Spur einer mehrspurigen Fahrbahn sich das eigene Fahrzeug befindet.

Im gezeigten Beispiel ist die Bewertungseinrichtung 32 außerdem mit einer Kommunikationsschnittstelle 42 verbunden, über die das eigene Fahrzeug mit entsprechenden Schnittstellen anderer Fahrzeuge oder mit einer Verkehrsleitzentrale oder einer sonstigen Infrastruktureinrichung kommunizieren kann. Eine solche Leitzentrale kann beispielsweise Daten über Baustellen, besondere Staugefahren und dergleichen auf der aktuell von dem eigenen Fahrzeug befahrenen Fahrbahn mitteilen, um so die Anpassung des Sende- und Empfangsgewinns an die jeweilige Situation zu verbessern.

Die Kommunikationsschnittstelle 42 kann auch dazu benutzt werden, Informationen an andere Verkehrsteilnehmer zu übermitteln. Wenn sich beispielsweise aus den von der Auswerteschaltung 26 gelieferten Daten ergibt, daß der Radarempfang durch Signale anderer Radarsensoren stark gestört ist, können über die Kommunikationsschnittstelle 42 die Radarsysteme der anderen Fahrzeuge veranlaßt werden, ihre Sendeleistung zu reduzieren um damit den Störpegel zu vermindern. Umgekehrt kann auf diese Weise selbstverständlich auch die Bewertungseinrichtung 32 des eigenen Fahrzeugs auf entsprechende Anforderungen von anderen Fahrzeugen reagieren. Beispielsweise kann in einer Notsituation, etwa wenn ein prädiktives Sicherheitssystem eine akute Kollisionsgefahr erkennt, die Sendeleistung des eigenen Radarsensors erhöht werden und gleichzeitig über die Kommunikationschnittstelle 42 ein Signal an die übrigen Verkehrsteilnehmer ausgegeben werden, ihre Sendeleistung zu reduzieren, damit das gefährdete Fahrzeug Vorrang erhält und optimale Detektionsbedingungen für den Radarsensor dieses Fahrzeugs geschaffen werden.

Mit Bezug auf Fig. 2 soll nun ein Beispiel für die Arbeitsweise der Radarsensors 10 in einer typischen Verkehrssituation illustriert werden. Es soll hier angenommen werden, daß das mit dem Radarsensor 10 ausgerüstete Fahrzeug 18 zunächst auf der äußersten rechten Spur 44 einer mehrspurigen Fahrbahn gefahren ist. Dies wurde beispielsweise vom Videosystem 40 erkannt, und die Bewertungseinrichtung hat daraufhin die Sendeleistung und den Empfangsgewinn für den am weitesten nach rechts weisenden Strahl 16 des Radarsensors reduziert. Das hat zur Folge, daß der Sensor weniger empfindlich für stationäre Objekte ist, die sich rechts neben dem Fahrbahnrand befinden. Der Ortungsbereich des Radarsensors wird in dieser Situation durch eine in Fig. 2 unschraffiert dargestellte Fläche 46 repräsentiert, die in bezug auf die Längsachse des Fahrzeugs 18 eine asymmetrische Gestalt hat. Fahrzeuge auf der linken Nebenspur können bei dieser Konfiguration gut erfaßt werden, während Störungen durch irrelevante Objekte am Fahrbahnrand unterdrückt werden.

Das Fahrzeug 18 erreicht nun einen Streckenabschnitt, in dem auf der rechten Seite eine zusätzliche Fahrspur 48 hinzugekommen ist. Diese Spur wird von einem Fahrzeug 50 befahren, das gerade eben in den Ortungsbereich des Radarsensors 10 eingetreten ist. Die Auswerteschaltung 26 erkennt daraufhin, daß nun eine rechte Nebenspur vorhanden ist, und erhöht dementsprechend den Sendegewinn und den Empfangsgewinn in dem Kanal, der dem rechten Strahl 16 zugeordnet ist. Der Ortungsbereich des Radarsensors wird dadurch um die in Fig. 2 schraffiert dargestellte Fläche 52 erweitert, so daß nun Einscherer, die eventuell von der rechten Nebenspur auf die Spur des Fahrzeugs 18 einscheren, früher erkannt werden können.

Fig. 3 zeigt ein Blockdiagramm eines Radarsensors 10, der beispielsweise mechanisch mit Hilfe eines Schwenkantriebs 54 im Azimut verschwenkt werden kann. Dieser Radarsensor weist nur eine einzige Sende- und Empfangskeule 56 auf, deren Azimutwinkel α periodisch entsprechend der Schwenkbewegung des Radarsensors 10 variiert. Der Analogteil der Sende- und Empfangselektronik einschließlich der Analog/Digital-Wandler 24 ist hier nur schematisch als Block 58 dargestellt.

Die Auswerteschaltung 26 und die Bewertungseinrichtung 32 kommunizieren in diesem Fall auch mit dem Schwenkantrieb 54, so daß der aktuelle Azimutwinkel α in die Auswertung und Bewertung mit einfließen kann. Gegebenenfalls kann der Azimutwinkel α bzw. die Oszillationsfrequenz des Radarsensors mit Hilfe der Bewertungseinrichtung 32 auch situationsabhängig variiert werden.

Die Einstelleinrichtung 34 moduliert in diesem Fall den Sende- und/oder Empfangsgewinn auch in Abhängigkeit vom aktuellen Azimutwinkel α.

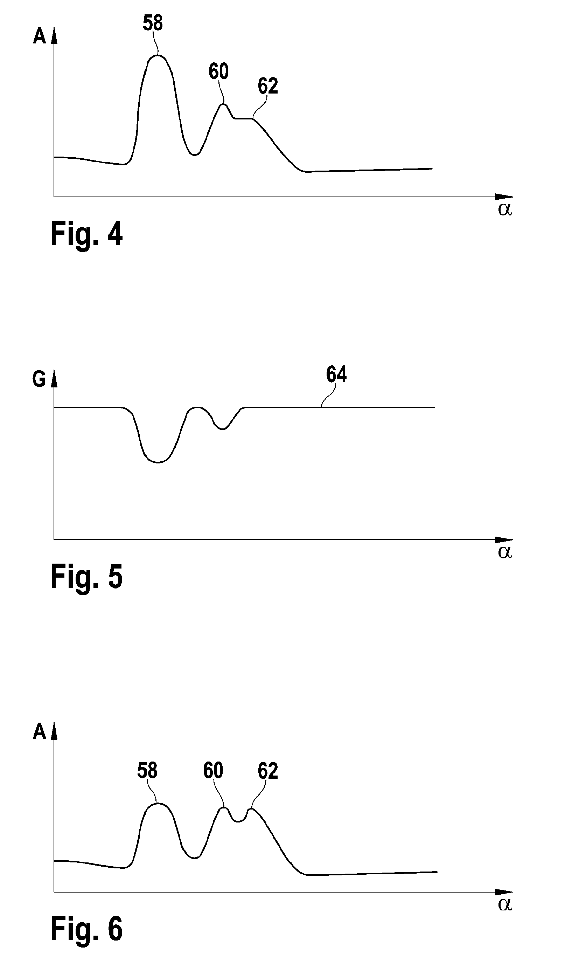

Als Beispiel zeigt Fig. 4 die in einem Schwenkzyklus des Radarsensors aufgenommene Amplitude A in Abhängigkeit vom Azimutwinkel α. Die Amplitude weist drei Maxima 58, 60, 62 auf, die sich in ihrer Höhe erheblich unterscheiden und aufgrund des begrenzten Winkelauflösungsvermögens zum Teil miteinander verschmolzen sind, wodurch die Auswertung der einzelnen Maxima und damit die Charakterisierung der ihnen entsprechenden Objekte erschwert wird.

Nachdem während eines Abtastschwenks der Amplitudenverlauf gemäß Fig. 4 festgestellt wurde, moduliert die Einstelleinrichtung 34 im nächsten Abtastschwenk des Radarsensors den Gewinn G gemäß der in Fig. 5 gezeigten Kurve 64. Dadurch wird der Gewinn gezielt bei den Winkelpositionen reduziert, bei denen im vorausgegangenen Zyklus Objekte mit dominierender Signalstärke festgestellt wurden. Das Ergebnis, das man dann im nächsten Abtastzyklus erhält, ist in Fig. 6 dargestellt. Aufgrund der Modulation des Gewinns G sind hier die Maxima 58, 60 und 62 wesentlich deutlicher voneinander getrennt und in der Höhe weitgehend vereinheitlicht, so daß die Auswertung erleichtert und ein besseres Winkelauflösungsvermögen des Radarsensors erreicht wird.

Das Verschwenken der Radarkeule 56 läßt sich nicht nur dadurch erreichen, daß der Radarsensor 10 insgesamt mechanisch verschwenkt wird, sondern beispielsweise auch dadurch, daß als Antenne ein sogenanntes Phased-Array eingesetzt wird, dessen Richtcharakteristik variiert wird, indem die Phasenbeziehung zwischen den einzelnen Antennenelementen verändert wird.

## Patentansprüche

1. Radarsensor zur Erfassung des Verkehrsumfelds in Kraftfahrzeugen (18), mit einem einstellbaren Sende- und/oder Empfangsverstärker (22, 30) und einer Einstelleinrichtung (34) zur Einstellung des Sende- und/oder Empfangsgewinns, **gekennzeichnet durch** eine Bewertungseinrichtung (32), die dazu ausgebildet ist, fortlaufend das Verkehrsumfeld zu bewerten und in Abhängigkeit von der aktuellen Bewertung auf die Einstelleinrichtung (34) einzuwirken.

2. Radarsensor nach Anspruch 1, **dadurch gekennzeichnet, daß** der Radarsensor (10) mehrere Antennen (12) zur Erzeugung mehrerer winkelversetzter Radarstrahlen (16) aufweist und daß die Bewertungseinrichtung (32) und die Einstelleinrichtung (34) dazu eingerichtet sind, den Gewinn für die verschiedenen Antennen (12) unabhängig voneinander einzustellen.

3. Radarsensor nach einem der vorstehenden Ansprüche, **dadurch gekennzeichnet, daß** die Bewertungseinrichtung (32) dazu ausgebildet ist, den Ortungsbereich (46) des Radarsensors (10) situationsabhängig auf Zonen (52) zu erweitern, in denen in der betreffenden Situation mit relevanten Objekten (50) zu rechnen ist.

4. Radarsensor nach einem der vorstehenden Ansprüche, **dadurch gekennzeichnet, daß** die Bewertungseinrichtung (32) dazu ausgebildet ist, Informationen über das Verkehrsumfeld von einem Navigationssystem (38) zu beziehen.

5. Radarsensor nach einem der vorstehenden Ansprüche, **dadurch gekennzeichnet, daß** die Bewertungseinrichtung (32) dazu ausgebildet ist, Informationen über das Verkehrsumfeld von einem Videosystem (40) zu beziehen.

6. Radarsensor nach einem der vorstehenden Ansprüche, **dadurch gekennzeichnet, daß** die Bewertungseinrichtung (32) mit einer Kommunikationsschnittstelle (42) zur Kommunikation mit anderen Fahrzeugen oder mit einer Verkehrsinfrastruktureinrichtung verbunden ist.

7. Radarsensor nach Anspruch 6, **dadurch gekennzeichnet, daß** die Kommunikationsschnittstelle (42) dazu ausgebildet ist, auf Anforderung durch die Bewertungseinrichtung (32) eine Aufforderung, die Sendeleistung zu reduzieren, an Radarsensoren anderer Fahrzeuge zu senden.

8. Radarsensor nach einem der vorstehenden Ansprüche, **dadurch gekennzeichnet, daß** der Radarsensor (10) dazu eingerichtet ist, die Sende- und/oder Empfangskeule (56) dynamisch im Azimut zu verschwenken, und daß die Bewertungseinrichtung (32) und die Einstelleinrichtung (34) dazu ausgebildet sind, den Gewinn in Abhängigkeit vom Azimutwinkel (α) der Sende- und/oder Empfangskeule (56) zu variieren.

9. Radarsensor nach Anspruch 8, **dadurch gekennzeichnet, daß** die Bewertungseinrichtung (32) und die Einstelleinrichtung (34) dazu ausgebildet sind, den Sende- und/oder Empfangsgewinn (G) bei den Azimutwinkeln (α) zu reduzieren, bei denen im vorangegangenen Zyklus eine hohe Signaldichte festgestellt wurde.
